# EUROPÄISCHE PATENTSCHRIFT

(11) **EP 0 781 623 B1**
(45) Veröffentlichungstag und Bekanntmachung des Hinweises auf die Patenterteilung: **04.04.2001**
(21) Anmeldenummer: 96118955.2
(22) Anmeldetag: 27.11.1996
(51) Int. Cl.: B23K 35/28, B32B 15/01, B23K 1/00, F28F 21/08

(54) **Verfahren zur Herstellung von hartgelöteten Aluminiumwärmetauschern**
Process for manufacturing brazed aluminium heat exchangers
Procédé pour la fabrication d'échangeurs de la chaleur en aluminium par brasage

(30) Priorität: 22.12.1995 DE 19548244
(43) Veröffentlichungstag der Anmeldung: 02.07.1997
(73) Patentinhaber: Behr GmbH & Co., D-70469 Stuttgart (DE)
(72) Erfinder: Duda, Bernd, Ing. grad., 75417 Mühlacker (DE); Völker, Cord, Ing. grad., 71522 Backnang (DE); Lorenz, Klaus, 70469 Stuttgart (DE)
(74) Vertreter: Wilhelm & Dauster Patentanwälte European Patent Attorneys

(56) Entgegenhaltungen:
- GB-A- 2 073 246
- US-A- 4 688 311
- US-A- 4 906 534
- US-A- 5 295 302
- WELDING JOURNAL INCLUDING: WELDING RESEARCH, Bd. 62, Nr. 10, Oktober 1983, MIAMI US, Seiten 31-38, XP002029306 D.J. SCHMATZ ET AL: "A Fluxless Process for Brazing Aluminum Heat Exchangers in Inert Gas"
- PATENT ABSTRACTS OF JAPAN vol. 012, no. 421 (C-541), 8.November 1988 & JP 63 153251 A (FURUKAWA ALUM CO LTD), 25.Juni 1988,

## Beschreibung

Die Erfindung betrifft ein Verfahren zur Herstellung von hartgelöteten Aluminium-Wärmetauschern, bei dem eine lothaltige Schicht und ein nichtkorrodierendes Flußmittel auf die Außenflächen von Flachrohren aufgebracht wird und nach dem Trocknen durch Erhitzen in einer inerten, insbesondere in einer Stickstoff Atmosphäre zur Verbindung mit anderen Teilen führt.

Es ist bekannt (DE-A-26 14 872) Aluminiumkomponenten oder Aluminiumlegierungskomponenten dadurch untereinander zu verlöten, daß man ein Kaliumfluoaluminatschmelzmittel und eine Aluminiumlötlegierung als wässrige Aufschlämmung aus feinverteiltem Schmelzmittel und Metallpulver auf mindestens eine der zu verlötenden Komponenten aufträgt, den aufgetragenen Film trocknet und die Komponenten durch Erwärmen in einer Inertgasatmosphäre verlötet. Dieses unter dem Namen "NOCOLOK-Verfahren" bekannte Lötverfahren, bei dem Flußmittelrückstände nach dem Löten nicht entfernt zu werden brauchen, hat sich in der Praxis für die Herstellung von Aluminiumwärmetauschern immer mehr durchgesetzt. Da mit einem Flußmittel gearbeitet werden muß, das in der Regel aufgesprüht wird und anschließend trocknen muß, ergeben sich überall da Schwierigkeiten, wo das Flußmittel in enge Querschnitte hereingebracht werden muß. Dies ist beispielsweise der Fall, wenn Wärmetauscher aus Flachrohren mit geringer lichter Weite, beispielsweise Wärmetauscher für Klimaanlagen, hergestellt werden sollen. Bei solchen dünnen Rohren läßt sich das Flußmittel nicht oder nur mit sehr großem Aufwand in das Innere der Rohre bringen und auch wieder trocknen.

Bekannt ist deswegen auch schon ein Aluminiumwärmetauscher geworden (DE U 93 18 525), bei dem man, um das Flußmittel beispielsweise zwischen die aneinander gelegten Kuppen von durchgehenden Sicken oder von in das Rohrinnere hereingedrückten Noppen zu bringen, die zur Bildung einer durchgehenden Trennwand oder zur Bildung von Abstützungen und Turbulenzschickanen dienen, vorgesehen hat, daß an den aneinanderliegenden Stellen zylindrische oder sphärische Flächenteile entstehen, die durch Öffnungen von außen mit dem Flußmittel versorgt werden können, das in die dort gebildeten Kapillarspalte eindringt. Solchermaßen aufgebaute Wärmetauscher sind aber relativ aufwendig und laufen auch Gefahr, daß nicht ausreichende Lötstellen dadurch auftreten, daß das Flußmittel im Inneren der Flachrohre nicht ausreichend getrocknet ist, ehe die Verlötung erfolgt.

Der vorliegenden Erfindung liegt daher die Aufgabe zugrunde, ein Verfahren der eingangs genannten Art vorzuschlagen, mit dem die Innenseite solcher Flachrohre nicht mehr mit einem Flußmittel versehen zu werden braucht, ohne daß jedoch im übrigen von dem bekannten Lötverfahren abgewichen werden muß.

Zur Lösung dieser Aufgabe werden bei einem Verfahren der eingangs genannten Art Flachrohre aus einer Aluminium-Legierung verwendet, die außen mit einer Lot-Plattierung auf AlSi-Basis versehen, innen dagegen blank sind und mit Turbulenzeinlagen versehen werden, die beidseitig eine Plattierung auf AlSi-Basis und einen Zusatz von 0,2 bis 1,5 % Magnesium aufweisen und das Flußmittel nur auf die Außenflächen der Flachrohre aufgebracht wird.

Es hat sich erstaunlicherweise gezeigt, daß trotz der an sich für das bekannte "NOCOLOK"-Lötverfahren nicht erwünschten Verwendung von Magnesiumzusätzen keine nachteiligen Folgen für das Lötverfahren entstehen und überraschenderweise auch in einem nach dem NOCOLOK-Verfahren arbeitenden Lötofen eine dauerhafte und feste Verlötung der nicht mit Flußmittel versehenen Rohrinnenteile erfolgen kann. Die Verwendung solchermaßen vorbereiteter Rohre und Turbulenzeinlagen führt aber dazu, daß das übliche und vorteilhafte Lötverfahren beibehalten werden kann, ohne daß es auf einen Flußmittelauftrag im Rohrinneren ankommt. Das neue Verfahren läßt sich daher sehr einfach und wirkungsvoll durchführen, indem die Rohraußenseiten in bekannter Weise mit dem nicht korrodierenden Flußmittel besprüht werden, während die offenen Rohrseiten bei diesem Vorgang abgedichtet gehalten werden. Danach kann in üblicher Weise die Trocknung und dann der Lötvorgang eingeleitet werden.

Das neue Verfahren eignet sich ganz besonders für Flachrohre mit einer geringen lichten Weite, beispielsweise in der Größenordnung von wenigen Millimetern. Es hat sich als vorteilhaft erwiesen, wenn die Außenlotplattierung der Flachrohre eine Schichtdicke von etwa 10% der Rohrwandstärke aufweist und wenn die Plattierung der Turbulenzeinlagen eine Schichtdicke von etwa 10% der Dicke der Turbulenzbleche aufweist.

Der Gedanke der Verwendung von bestimmten Flachrohren zur Herstellung von hartgelöteten Aluminiumwärmetauschern läßt sich nicht nur bei der Herstellung von Wärmetauschern mit Flachrohren mit Turbulenzeinlagen einsetzen, sondern auch bei einem Verfahren zur Herstellung von hartgelöteten Aluminiumwärmetauschern, bei dem Aluminiumflachrohre in der Art des vorher erwähnten Wärmetauschers nach der DE U 93 18 525 mit seitlich um etwa die halbe lichte Weite eingedrückten Sicken versehen sind, die nach dem Verlöten zu einer durchgehenden Abstützwand werden.

In diesem Fall werden nach der Erfindung wie in Anspruch 5 beansprucht geschweißte Flachrohre aus für das Nocolok-Verfahren geeigneten Legierungen verwendet, die außen mit einer Lot-Plattierung auf AlSi-Basis und innen mit einer Plattierung auf AlSi-Basis und einem Zusatz von 0,2 bis 1,5% Magnesium versehen sind. Hier kann in bekannter Weise vor dem Zusammenschweißen der Flachrohre die Plattierung erfolgen. Es hat sich gezeigt, daß auch in diesem Fall die Rohre nur außen mit dem Flußmittel versehen zu werden brauchen, während innen eine dauerhafte und feste Verlötung auch ohne Flußmittel stattfindet.

Auch in diesem Fall hat es sich als zweckmäßig erwiesen, wenn die Plattierungen in bestimmten Schichtstärken erfolgen. So ist es vorteilhaft, wenn die Innenplattierung der Flachrohre eine Schichtdicke von etwa 5% der Rohrwandstärke aufweist und wenn die Außenplattierung eine Schichtdicke von etwa 10% der Rohrwandstärke besitzt. Solchermaßen ausgebildete Flachrohre lassen sich, ebenso wie Flachrohre der vorher erwähnten Art mit Turbulenzeinlagen, in bekannter Weise mit zwischen den Rohren vorgesehenen Wellrippen und mit Rohrböden verbinden.

Die Erfindung ist in der Zeichnung anhand von Ausführungsbeispielen dargestellt und wird im folgenden näher erläutert. Es zeigen:
- Fig. 1: eine schematische perspektivische Darstellung eines nach dem erfindungsgemäßen Verfahren verlötbaren Flachrohres mit einer Turbulenzeinlage,
- Fig. 2: die Vergrößerung des Ausschnittes II in Fig. 1,
- Fig. 3: die schematische perspektivische Darstellung eines nach dem erfindungsgemäßen Verfahren verlötbaren Flachrohres mit einer inneren Trennwand, und
- Fig. 4: die vergrößerte Darstellung des Ausschnittes IV der Fig. 3.

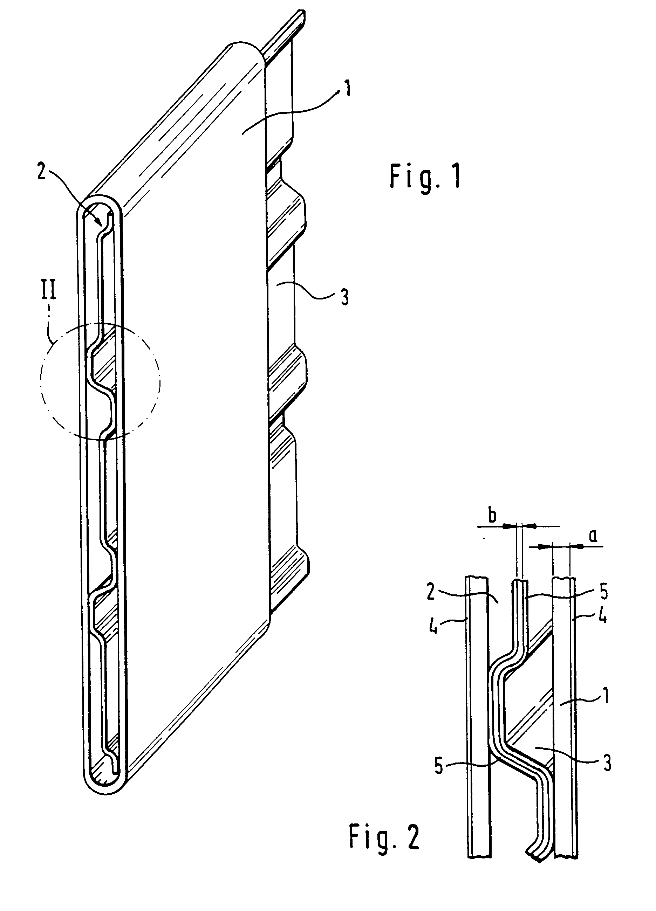

In den Figuren 1 und 2 ist ein Flachrohr (1) aus einer Aluminium-Mangan-Kupfer-Legierung (AlMnCu) gezeigt, dessen innerer Hohlraum (2) mit einer Turbulenzeinlage (3) versehen ist. Das Flachrohr (1), das auch aus anderen, für das Nocolok-Verfahren geeigneten Legierungen, z.B. Al, AlMn bestehen kann, ist in nicht näher dargestellter Weise auf seiner Außenseite (1a) mit einer Schicht (4) plattiert, deren Schichtdicke etwa 10% der Stärke (a) der Rohrwand des Flachrohres (1) entspricht. Diese Lot-Plattierungsschicht ist auf einer AlSi-Basis hergestellt und kann z.B. AlSi 10 sein. Die Innenseite des Flachrohres (1), d.h. also die den Innenraum (2) begrenzende Seite, ist blank.

Die in den Innenraum (2) eingeschobene Turbulenzeinlage (3) besteht ebenfalls aus AlMnCu, und sie ist beidseitig mit einer Schicht (5) plattiert, die auf AlSi Basis aufgebaut ist und mit einem Zusatz von 0,2 bis 1,5% Magnesium versehen ist. Die Dicke der Plattierungsschicht (5) der Turbulenzeinlagen (3) beträgt dabei etwa 10% der Dicke (b) der Turbulenzbleche (3).

Das so aufgebaute Flachrohr wird zur Herstellung eines Wärmetauschers in der bekannten Weise mit anderen Flachrohren, den Rohrböden, ggf. den Sammelkästen und mit den zwischen den Flachrohren vorzusehenden Wellrippen zum Wärmetauscher zusammengestellt und dann entfettet. Die beidseitigen Rohröffnungen werden dann abgedeckt, und es erfolgt die Beaufschlagung der Außenwände mit der Schicht (4) durch das Flußmittel. Nach dem anschließenden Trocknen kann der vorbereitete Wärmetauscher in den Lötofen gebracht werden und nach dem bekannten Verfahren durch relativ kurzzeitiges Erhitzen auf etwa 600°C zur Endform verlötet werden.

Es hat sich gezeigt, daß auch die im Rohrinneren eingesetzte Turbulenzeinlage eine feste Verbindung mit dem Flachrohr (1) eingeht, obwohl hier kein Flußmittel vorgesehen war.

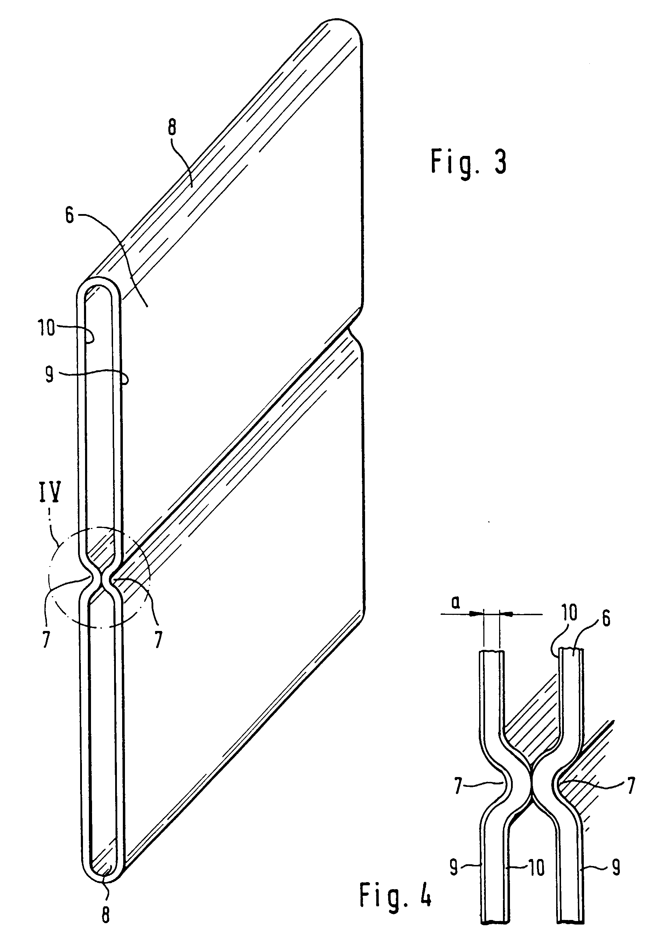

Nach den Figuren 3 und 4 ist ein Flachrohr (6) vorgesehen, das als verschweißtes Rohr ausgebildet ist, d.h., daß es aus einer zunächst ebenen Platine durch Anbringung von Sicken (7) und Aufbiegen zur Endform gebracht wird, ehe an einer der Schmalseiten (8) eine nicht näher gezeigte Schweißnaht angebracht wird.

Das Flachrohr (6) besteht aus einer Aluminium-Mangan-Kupfer-Legierung (AlMnCu).

Vor dem Aufbiegen und Verschweißen zur Rohrform ist das Ausgangsmaterial beidseitig mit einer Lot-Plattierung versehen worden und zwar so, daß die spätere Außenseite eine Schicht (9) (siehe Fig. 4) in einer Dicke von etwa 10% der Rohrwandstärke (a) aufweist. Diese Lot-Schicht ist auf AlSi-Basis aufgebaut und kann z.B. AlSi 10 sein. Die Innenseite der Flachrohre (6) ist mit einer Schicht auf AlSi-Basis, beispielsweise ebenfalls AlSi 10 mit einem Zusatz von 0,2 bis 1,5% Magnesium versehen. Diese Schicht (10) besitzt eine Schichtdicke von etwa 5% der Rohrwandstärke (a).

Die so aufgebauten Rohre (6) werden dann, wie auch beim Ausführungsbeispiel der Figuren 1 und 2, in bekannter Weise zu einem Wärmetauscher zusammengestellt, an ihren Enden abgedichtet gehalten und mit dem für den späteren Lötvorgang notwendigen Flußmittel besprüht. Nach dem Trocknen dieses Flußmittels auf der Außenseite, das die Rohrinnenseiten nicht erreichen kann, wird der Wärmetauscher in den Lötofen gebracht und dort nach dem "NOCOLOK"-Verfahren verlötet.

Es hat sich gezeigt, daß auf diese Weise auch die aneinanderliegenden Kuppen der jeweils um die Hälfte der lichten Weite nach innen gedrückten Sicken fest und dauerhaft miteinander verlötet werden können, ohne daß jedoch eine aufwendige Befluxung der Rohrinnenseite notwendig gewesen wäre.

## Patentansprüche

1. Verfahren zur Herstellung von hartgelöteten Aluminiumwärmetauschern, bei dem eine lothaltige Schicht und ein nichtkorrodierendes Flußmittel auf die Außenflächen von Flachrohren aufgebracht wird und nach dem Trocknen durch Erhitzen in einer inerten, insbesondere in einer Stickstoff Atmosphäre zur Verbindung mit anderen Teilen führt, dadurch gekennzeichnet, daß Flachrohre (1) aus einer Al-Legierung verwendet werden, die außen mit einer Lot-Plattierung (4) auf AlSi-Basis versehen, innen dagegen blank sind und mit Turbulenzeinlagen (3) versehen werden, die beidseitig eine Plattierung (5) auf AlSi-Basis und einen Zusatz von 0,2 bis 1,5% Mg aufweisen und das Flußmittel nur auf die Außenflächen der Flachrohre aufgebracht wird.

2. Verfahren nach Anspruch 1, dadurch gekennzeichnet, daß die Flachrohre (1) eine geringe lichte Weite aufweisen.

3. Verfahren nach den Ansprüche 1 und 2, dadurch gekennzeichnet, daß die Plattierungsschicht (4) der Flachrohre (1) eine Dicke von etwa 10% der Rohrwandstärke (a) aufweist.

4. Verfahren nach den Ansprüchen 1 und 2, dadurch gekennzeichnet, daß die Plattierungsschicht (5) der Turbulenzeinlagen (3) eine Dicke von etwa 10% der Dicke (b) der Turbulenzbleche (3) aufweist.

5. Verfahren zur Herstellung hartgelöteten AluminiumWärmetauschern, bei dem eine lothaltige Schicht und ein nicht korrodierendes Flußmittel auf die Außenflächen von Flachrohren (6) aufgebracht wird und nach dem Trocknen durch Erhitzen in einer inerten, insbesondere in einer Stickstoff-Atmosphäre zur Verbindung von seitlich um etwa die halbe lichte Weite eingedrückten Sicken zu einer durchgehenden Abstützwand führen, dadurch gekennzeichnet, daß geschweißte Flachrohre (6) aus einer Al-Legierung verwendet werden, die außen mit einer Plattierung auf AlSi-Basis und innen mit einer Plattierung auf AlSi-Basis und einem Zusatz von 0,2 bis 1,5% Mg versehen sind und das Flußmittel nur auf die Außenflächen der Flachrohren aufgebracht wird.

6. Verfahren nach Anspruch 5, dadurch gekennzeichnet, daß die Flachrohre (6) eine geringe lichte Weite aufweisen.

7. Verfahren nach Anspruch 5, dadurch gekennzeichne,t daß die innere Plattierungsschicht (10) der Flachrohre (6) eine Dicke von eta 5% der Rohrwandstärke (a) aufweist.

8. Verfahren nach Anspruch 5, dadurch gekennzeichnet, daß die äußere Plattierungsschicht (9) eine Dicke von etwa 10% der Rohrwandstärke (a) aufweist.

## Claims

1. Process for the production of brazed aluminium radiators, in which a coating containing a brazing alloy and a non-corrosive flux is applied to the outer surfaces of flat tubes and after drying, heated in an inert atmosphere, in particular a nitrogen atmosphere, to form a joint with other components,
**characterised in that**
flat tubes (1) made of an aluminium alloy are used, which are provided on the outside with a braze coating (4) based on AlSi but are in contrast uncoated on the inside and are provided with turbulence inserts (3) which have on both sides an AISi-based coating with an addition of 0.2 to 1.5% Mg, and the flux is only applied to the outer surfaces of the flat tubes.

2. Process according to Claim 1,
**characterised in that**
the flat tubes (1) have a small inside width.

3. Process according to Claims 1 and 2,
**characterised in that**
the coating film (4) on the flat tubes (1) has a thickness approximately 10% of the tube wall thickness (a).

4. Process according to Claims 1 and 2,
**characterised in that**
the coating film (5) on the turbulence inserts (3) has a thickness approximately 10% of the thickness (b) of the turbulence plates (3).

5. Process for the production of brazed aluminium radiators, in which a coating containing a brazing alloy and a non-corrosive flux is applied to the outer surfaces of flat tubes (6) and after drying, heated in an inert atmosphere, in particular a nitrogen atmosphere, to join beads produced on the sides by pressing in by about half the inside thickness to form a through-going bracing wall,
**characterised in that**
welded flat tubes (6) made from an aluminium alloy are used, which are provided on the outside with a coating based on AlSi and on the inside with a coating based on AlSi with an addition of 0.2 to 1.5% of magnesium, and the flux is only applied to the outer surfaces of the flat tubes.

6. Process according to Claim 5,
**characterised in that**
the internal coating film (10) of the flat tubes (6) has a thickness approximately 5% of the tube wall thickness (a).

7. Process according to Claim 5,
**characterised in that**
the external coating film (9)) has a thickness approximately 10% of the tube wall thickness (a).

## Revendications

1. Procédé de fabrication d'échangeurs de chaleur en aluminium par brasage à haute température, dans le cas duquel on applique sur les surfaces extérieures de tubes plats une couche contenant la brasure et un fondant non corrodant qui, après séchage par chauffage dans une atmosphère inerte, en particulier dans une atmosphère d'azote, conduisent à la liaison avec d'autres pièces, caractérisé par le fait que l'on emploie des tubes plats (1) qui sont constitués d'un alliage d'Al, sont munis extérieurement d'un placage de brasure (4) à base d'AlSi, qui par contre sont vierges à l'intérieur et que, pour la turbulence, on garnit de garniture insérées (3) qui, des deux côtés, présentent un placage (5) à base d'AlSi et un additif de 0,2 à 1,5% de Mg et que l'on n'applique le fondant que sur les surfaces extérieures des tubes plats.

2. Procédé selon la revendication 1, caractérisé par le fait que les tubes plats (1) présentent un faible passage libre.

3. Procédé selon la revendication 1 et 2, caractérisé par le fait que la couche de placage (4) des tubes plats (1) présente une épaisseur d'environ 10% de l'épaisseur (a) de paroi des tubes.

4. Procédé selon la revendication 1 et 2, caractérisé par le fait que la couche de placage (5) des garnitures insérées (3) pour la turbulence présente une épaisseur d'environ 10% de l'épaisseur (b) des tôles (3) pour la turbulence.

5. Procédé de fabrication d'échangeurs de chaleur en aluminium par brasage à haute température, dans le cas duquel on applique sur les surfaces extérieures de tubes plats (6) une couche contenant la brasure et un fondant non corrodant qui, après séchage par chauffage dans une atmosphère inerte, en particulier dans une atmosphère d'azote, conduisent à la liaison de soyages estampés latéralement d'environ la demi-valeur du passage libre, pour donner une paroi d'appui continue, caractérisé par le fait que l'on emploie des tubes plats soudés (6) qui sont constitués d'un alliage d'Al, sont munis extérieurement d'un placage à base d'AlSi et sont munis intérieurement d'un placage à base d'AlSi et d'un additif de 0,2 à 1,5% de Mg; et que l'on n'applique le fondant que sur les surfaces extérieures des tubes plats.

6. Procédé selon la revendication 5, caractérisé par le fait que les tubes plats (6) présentent un faible passage libre.

7. Procédé selon la revendication 5, caractérisé par le fait que les la couche intérieure (10) de placage des tubes plats (6) présente une épaisseur d'environ 5% de l'épaisseur (a) de paroi des tubes.

8. Procédé selon la revendication 5, caractérisé par le fait que la couche extérieure (9) de placage présente une épaisseur d'environ 10% de l'épaisseur (a) de paroi des tubes.
